# EUROPÄISCHE PATENTSCHRIFT

(11) **EP 3 023 012 B1**
(45) Veröffentlichungstag und Bekanntmachung des Hinweises auf die Patenterteilung: **18.10.2017**
(21) Anmeldenummer: 15195113.4
(22) Anmeldetag: 18.11.2015
(51) Int. Cl.: A23N 12/06, A23N 12/02

(54) **VORRICHTUNG ZUM REINIGEN VON GEMÜSEN**
DEVICE FOR CLEANING VEGETABLES
DISPOSITIF DE NETTOYAGE DE LÉGUMES

(30) Priorität: 18.11.2014 CH 17812014
(43) Veröffentlichungstag der Anmeldung: 25.05.2016
(73) Patentinhaber: Villiger, Bruno, 5443 Niederrohrdorf (CH)
(72) Erfinder: Villiger, Bruno, 5443 Niederrohrdorf (CH)
(74) Vertreter: Spierenburg, Pieter

(56) Entgegenhaltungen:
- EP-A1- 0 087 649
- EP-A1- 2 116 142
- DE-A1- 3 019 601
- US-A- 1 401 437
- US-A- 1 644 488
- US-A- 2 124 460
- US-A1- 2006 107 977

## Beschreibung

### TECHNISCHES GEBIET

Die Erfindung betrifft eine Vorrichtung zum Reinigen von erntefrischen Gemüsen nach dem Oberbegriff des Patentanspruchs 1.

### STAND DER TECHNIK

Die Reinigung von erntefrischen Gemüsen, wie Broccoli, Blumenkohl, Blattsalat, Spinat oder Chicorees erfolgt in der Regel rein manuell, indem das in gelochten, offenen Behältern enthaltene Gemüse mit einer Brause abgespült und in ein Wasserbad getaucht wird. Die Behälter können anschliessend in eine Zentrifuge aufgenommen werden, um das nasse Gemüse durch Zentrifugieren zu trocknen. Eine solche Zentrifuge ist zum Beispiel beschrieben in FR-A-2421568, wobei die Behälter manuell in Aufnahmen der Zentrifugen eingesetzt werden.

### AUFGABE DER ERFINDUNG

Der vorliegenden Erfindung liegt nun die Aufgabe zugrunde, eine Vorrichtung zum Reinigen von erntefrischen Gemüsen derart zu verbessern, dass eine voll-automatische Reinigung durch Waschen und Trocknen ermöglicht wird.

Diese Aufgabe wird durch eine Vorrichtung zum Reinigen von erntefrischen Gemüsen mit den Merkmalen des Patentanspruchs 1 gelöst.

Die Erfindung hat den Vorteil, dass frisch geernte Gemüse und Salate, die in einem offenen Behälter gelegt sind, ohne weitere Handlungen vollautomatisch gewaschen werden können. Da die offenen Behälter ebenfalls vollständig gereinigt werden, können diese nach dem Entleeren sofort weiterbenutzt werden.

### BESCHREIBUNG DER ERFINDUNG

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine schematische Darstellung einer Reinigungsvorrichtung mit offenen Behältern vor dem Eintauchen,
- Fig. 2: die Reinigungsvorrichtung der Fig. 1 mit eingetauchten Behältern,
- Fig. 3: eine Obenansicht der Reinigungsvorrichtung gemäss dem Pfeil B in Fig. 1, und
- Fig. 4 bis 6: eine schematische Darstellung der Zentrifuge der Reinigungsvorrichtung.

In den Figuren sind für dieselben Elemente jeweils dieselben Bezugszeichen verwendet worden und erstmalige Erklärungen betreffen alle Figuren, wenn nicht ausdrücklich anders erwähnt.

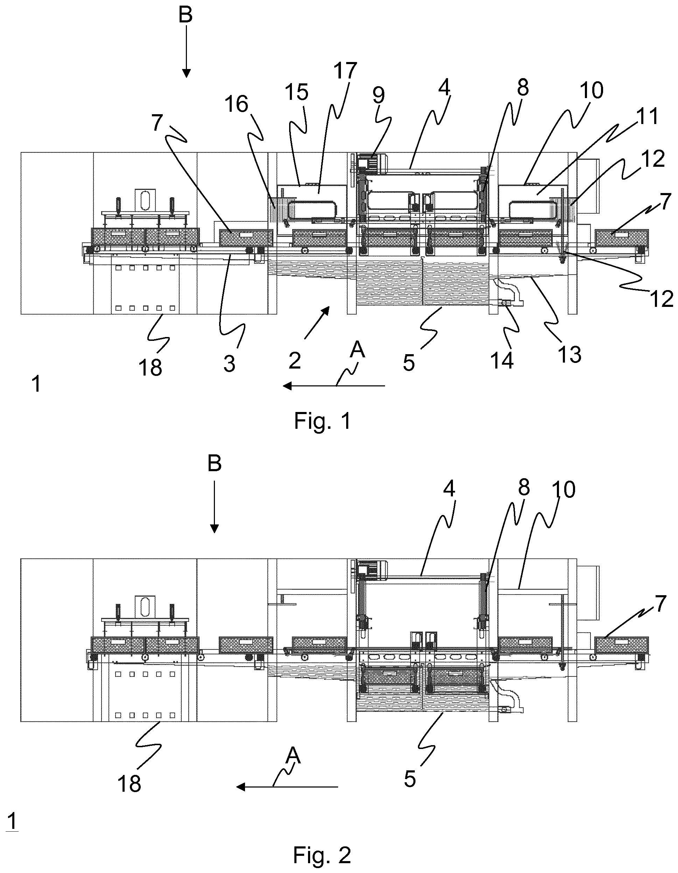

In der Figur 1 ist eine Reinigungsvorrichtung 1 mit einer Waschanlage 2 dargestellt, welche ein Förderband 3 und eine Eintaucheinrichtung 4 mit einem Wasserbehälter 5 aufweist. Der Pfeil A zeigt die Bewegungsrichtung des Förderbands 3 mit darauf angeordneten offenen, gelochten Behältern 7. Die Eintaucheinrichtung 4 weist einen Lift 8 auf, der von einem Elektromotor 9 angetrieben wird. Vor der Eintaucheinrichtung 4 ist eine erste Sprüheinheit 10 mit einem Kranz 11 und auf diesem regelmässig verteilten Sprühdüsen 12 angeordnet. Die Sprühdüsen 12 sind sowohl oben auf den Behälter 7 als auch auf die Seiten des Behälters 7 gerichtet und sind geeignet das erntefrischen Gemüses mit Wasser zu bespritzen. Das überflüssige Wasser wird von einem geneigten, flachen Ablaufblech 13 zu einem Ablaufrohr 14 abgeführt. Nach der Eintaucheinrichtung 4 ist eine zweite Sprüheinheit 15 mit Sprühdüsen 16 auf einem Kranz 17 vorgesehen, mit welchem das in den Behältern 7 eingefüllte Gemüse abgespritzt wird. Anschliessend an die Waschanlage 2 ist eine Zentrifuge 18 angeordnet, mittels welcher die Behälter 7 mit dem Gemüse geschleudert werden um so das Wasser aus dem Gemüse zu entfernen. Wie nun aus Figur 2 ersichtlich, werden die Behälter 7 mit dem Lift 8 in den Wasserbehälter 5 eingetaucht, so dass das Gemüse insbesondere Salate gründlich gewaschen werden. Der Wasserbehälter 5 ist ebenfalls am Ablaufrohr 14 angeschlossen.

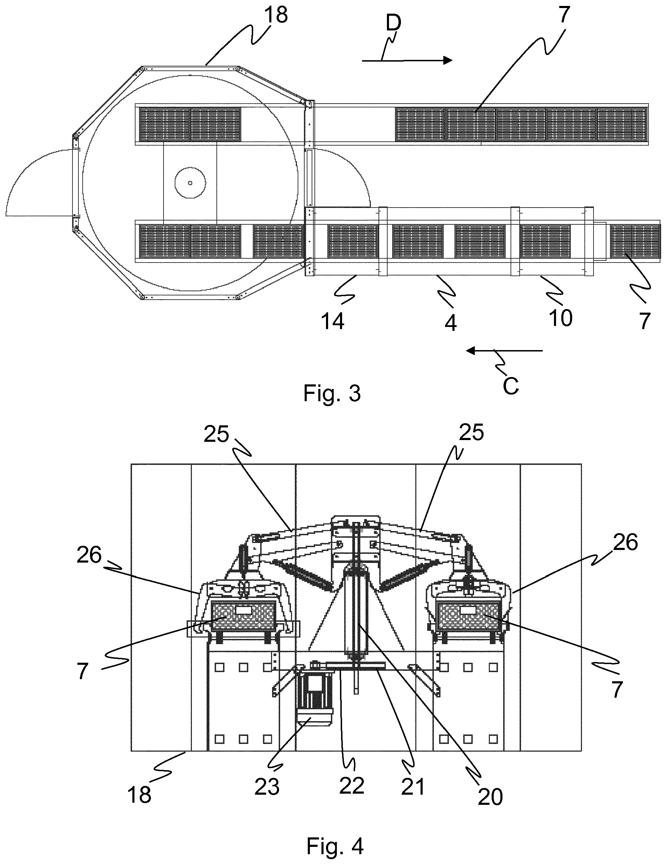

Figur 3 zeigt die Reinigungsvorrichtung 1 in Draufsicht gemäss dem Pfeil B in Fig. 1. Die Pfeile C und D zeigen die Umlaufrichtung der beförderten Behälter 7 an.

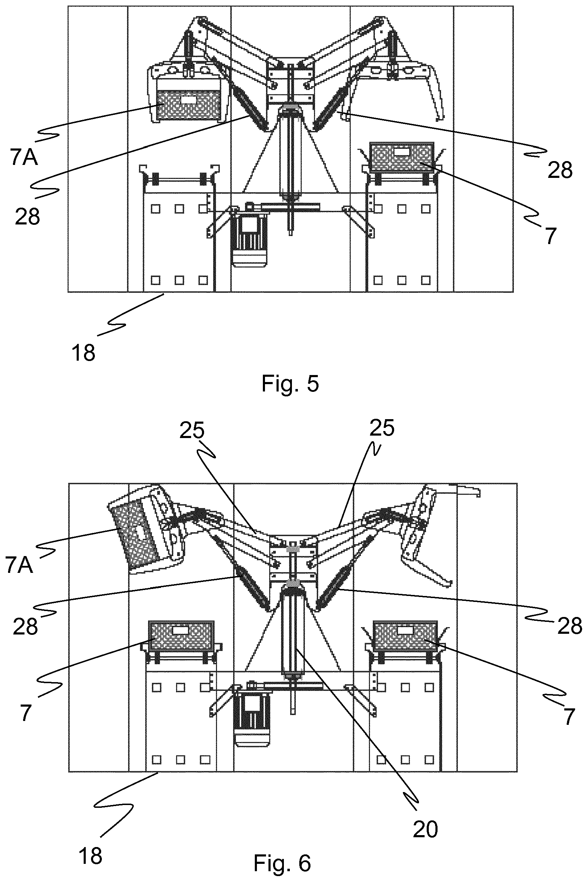

Die Zentrifuge 18 ist in Details in den Figuren 4 bis 6 gezeigt. Sie weist eine zentrale Achse 20 auf, welche von einem Riemen 21 über eine Riemenscheibe 22 von einem Elektromotor 23 angetrieben wird. An der Achse 20 sind zwei gegenüberliegende, gelenkige Arme 25 mit Greifern 26 vorgesehen, welche auf beiden Seiten die Behälter 7 umgreifen. In Figur 5 wird ein einzelner Behälter 7A angehoben und dieser Behälter 7A wird in Figur 6 durch eine schnelle Rotation der Achse 20 rund herum geschleudert. Die gelenkige Arme 25 werden mittels jeweils einer Kolben-/Zylindereinheit 28 nach oben gedrückt, so dass der Behälter 7A um etwa 70° gekippt wird. Damit wird bei der Schleuderbewegung das überflüssige Wasser durch den Boden des Behälters 7A weggeschleudert.

In der Praxis werden die Behälter 7 mit den gereinigten Gemüsen oder Salaten auf Lastwagen an Grossverteiler ausgeliefert und dort zum Verkauf der Gemüse oder Salate aufgestellt. Die leeren Behälter 7 werden anschliessend wieder auf Lastwagen geladen und an die Bauern für die Ernte abgegeben. Die Behälter 7 sind von Vorteil zusammenklappbar, um beim Transport Platz zu sparen.

## Patentansprüche

1. Vorrichtung (1) zum Reinigen von erntefrischen Gemüsen, welche in offenen, gelochten Behältern (7) enthalten sind, mit einer Zentrifuge (18), um die gewaschenen Gemüse in den Behältern zu trocknen, **dadurch gekennzeichnet, dass** eine Waschanlage (2) vorgesehen ist, welche ein Förderband (3) und eine Eintaucheinrichtung (4) mit einem Wasserbehälter (5) aufweist, um die offenen Behälter (7) ins Wasser einzutauchen und dem Wasser wieder zu entnehmen, und die Zentrifuge (18) mindestens einen gelenkigen Arm (25) mit Greifern (26) aufweist, um einen gelochten Behälter (7) anzuheben und im angewinkelten Zustand zu schleudern.

2. Vorrichtung nach Anspruch 1, **dadurch gekennzeichnet, dass** die Eintaucheinrichtung (4) einen von einem Elektromotor (9) angetriebenen Lift (8) aufweist, welcher ab- und aufbewegbar ist.

3. Vorrichtung nach Anspruch 1 oder 2, **dadurch gekennzeichnet, dass** eine erste Sprüheinheit (10) vor der Eintaucheinrichtung (4) vorgesehen ist, mit welcher das in den Behältern (7) befindliche Gemüse vorrangig zum Eintauchen benetzbar ist.

4. Vorrichtung nach Anspruch 3, **dadurch gekennzeichnet, dass** die erste Sprüheinheit (10) einen den Behälter umfassenden Kranz (11) aufweist, der auf gegenüberliegenden Seiten Sprühdüsen (12) aufweist.

5. Vorrichtung nach Anspruch 3 oder 4, **dadurch gekennzeichnet, dass** eine zweite Sprüheinheit (15) nach der Eintauchvorrichtung (4) vorgesehen ist, mit welcher der Behälter (7) nach dem Eintauchen nochmals benetzbar ist.

6. Vorrichtung nach einem der Ansprüche 1 bis 5, **dadurch gekennzeichnet, dass** die Zentrifuge (18) zwei gegenüberliegende, gelenkige Arme (25) mit Greifern (26) aufweist, um eine symmetrische Belastung der Zentrifuge (18) zu erreichen.

## Claims

1. A device (1) for cleaning freshly harvested vegetables, which are contained in open, perforated containers (1), comprising a centrifuge (18) to dry the washed vegetables in the containers, **characterized in that** a washing facility (2) is provided, which has a conveyor belt (3) and an immersion device (4) comprising a water container (5) to immerse the open containers (7) into the water and remove them from the water again, and the centrifuge (18) has at least one articulated arm (25) comprising grippers (26), to raise a perforated container (7) and spin it in the angled state.

2. The device according to Claim 1, **characterized in that** the immersion device (4) has a lift (8), which is driven by an electric motor (9), and is movable up and down.

3. The device according to Claim 1 or 2, **characterized in that** a first spray unit (10) is provided before the immersion device (4), using which the vegetables located in the containers (7) can be wetted prior to the immersion.

4. The device according to Claim 3, **characterized in that** the first spray unit (10) has a collar (11) enclosing the container, which has spray nozzles (12) on opposite sides.

5. The device according to Claim 3 or 4, **characterized in that** a second spray unit (15) is provided after the immersion device (4), using which the container (7) can be wetted once again after the immersion.

6. The device according to any one of Claims 1 to 5, **characterized in that** the centrifuge (14) has two opposing articulated arms (25) comprising grippers (26) to achieve a symmetrical load of the centrifuge (18).

## Revendications

1. Dispositif (1) de nettoyage de légumes fraîchement récoltés qui sont contenus dans des récipients perforés ouverts (7), comportant une centrifugeuse (18) pour sécher les légumes lavés dans les récipients, **caractérisé en ce qu'**une installation de lavage (2) est prévue, laquelle présente un bande transporteuse (3) et un moyen d'immersion (4) comportant un réservoir d'eau (5) pour plonger les récipients ouverts (7) dans l'eau et les ressortir de l'eau, et la centrifugeuse (18) présente au moins un bras articulé (25) muni de grappins (26) pour soulever un récipient perforé (7) et l'essorer en position inclinée.

2. Dispositif selon la revendication 1, **caractérisé en ce que** le moyen d'immersion (4) présente un élévateur (8) qui est entraîné par un moteur électrique (9) et peut être descendu et monté.

3. Dispositif selon la revendication 1 ou 2, **caractérisé en ce qu'**une première unité d'aspersion (10) est prévue avant le moyen d'immersion (4), avec laquelle les légumes se trouvant dans les récipients (7) peuvent être mouillés avant l'immersion.

4. Dispositif selon la revendication 3, **caractérisé en ce que** la première unité d'aspersion (10) présente une couronne (11) entourant le récipient, laquelle présente des buses d'aspersion (12) sur des côtés opposés.

5. Dispositif selon la revendication 3 ou 4, **caractérisé en ce qu'**une deuxième unité d'aspersion (15) est prévue après le moyen d'immersion (4), avec laquelle le récipient (7) peut une nouvelle fois être mouillé après l'immersion.

6. Dispositif selon l'une des revendications 1 à 5, **caractérisé en ce que** la centrifugeuse (18) présente deux bras articulés opposés (25) munis de grappins (26) pour obtenir une sollicitation symétrique de la centrifugeuse (18).
